# EUROPÄISCHE PATENTSCHRIFT

(11) **EP 1 440 448 B1**
(45) Veröffentlichungstag und Bekanntmachung des Hinweises auf die Patenterteilung: **26.07.2006**
(21) Anmeldenummer: 01274640.0
(22) Anmeldetag: 02.11.2001
(51) Int. Cl.: G21F 7/047, B01L 1/02, B25J 21/00

(54) **TÜR-VORRICHTUNG FÜR EINEN ISOLATOR**
DOOR UNIT FOR AN INSULATOR
DISPOSITIF DE PORTE POUR ISOLATEUR

(43) Veröffentlichungstag der Anmeldung: 28.07.2004
(73) Patentinhaber: Imbolex GmbH, 88448 Attenweiler (DE)
(72) Erfinder: OSTERMEYER, Thomas, 88440 Biberach (DE)
(74) Vertreter: Kiessling, Christian
(86) Internationale Anmeldenummer: PCT/DE2001/004136
(87) Internationale Veröffentlichungsnummer: WO 2003/041087

(56) Entgegenhaltungen:
- GB-A- 2 030 503
- US-A- 3 682 208
- US-A- 4 494 586
- US-A- 5 090 782

## Beschreibung

Die Erfindung betrifft eine Tür-Vorrichtung für einen Isolator, die über ein Scharnier an einem eine Öffnung des Isolators umschließenden Isolatorrahmen befestigt ist, mit einem aus zwei Bajonettverschlüssen unterschiedlicher Chiralität zusammengesetzten Doppelbajonettverschluss zum reziprozierbaren Überführen des Isolators aus einem ersten Zustand, in dem die von der Innenseite des Isolators zu öffnende Türe offen und von dem Isolatorrahmen gelöst ist und ein eine Öffnung eines Behälters umschließender Behälterflansch mit dem Isolatorrahmen abgedichtet fest verbunden ist, in einem zweiten Zustand, in dem die Türe geschlossen und mit dem Isolatorrahmen angedichtet fest verbunden ist und der Behälterflansch von dem Isolatorrahmen gelöst ist.

Eine Tür-Vorrichtungen der eingangs genannten Art ist aus US 3 682 208 A bekannt.

Tür-Vorrichtungen der eingangs genannten Art sind im Stand der Technik in einer Vielzahl unterschiedlichster Ausführungsformen bekannt, denen jedoch sämtlich ein gleiches oder ähnliches Wirkprinzip gemein ist. Die bekannten Isolatortüren weisen dabei in der Regel eine über ein Scharnier an einem Rahmen befestigte Türe auf, wobei die Türe einen Bajonettverschluss enthält, der es ermöglicht, eine die Öffnung eines Flansches verschließende Wechselscheibe während eines Öffnungsvorgangs der Türe fest mit der Türe zu verbinden und dabei gleichzeitig über einen zweiten Bajonettverschluss von dem Flansch zu lösen, wobei die Wechselscheibe in geöffnetem Zustand der Türe reversibel lösbar mit derselben verbunden ist. Bei Schließen der Türe durch Handbetätigung über in das Innere des Isolators eingreifende Schutzhandschuhe wird die Türe zuerst mittels eines Riegels fest mit dem Rahmen des Isolators verbunden, und es wird anschließend durch entsprechendes Zurückdrehen der an dem Flansch befestigten Handgriffe mit Hilfe des doppelten Bajonettverschluss erreicht, dass zum einen die Wechselscheibe von der Türe gelöst wird und gleichzeitig mit dem Flansch verbunden wird, und zum anderen, dass der Flansch von dem Rahmen der Türe gelöst wird, wobei die Wechselscheibe dann wieder die Öffnung des Flansches verschließend fest mit dem Flansch verbunden ist.

Das Doppelbajonett der bekannten Tür-Vorrichtungen erfüllt dadurch, dass die beiden Bajonettverschlüsse zueinander eine unterschiedliche Chiralität aufweisen, d.h. ein Bajonettverschluss mit einem Rechtsgewinde versehen ist und der entsprechend andere Bajonettverschluss mit einem Linksgewinde versehen ist, bei Drehen der an dem Flansch angebrachten Handgriffe die Doppelfunktion des Befestigens des Flansches an dem Rahmen bei gleichzeitigem Lösen der Wechselscheibe von dem Rahmen und Befestigen der Wechselscheibe an der Türe, wie auch bei entsprechender Funktionsumkehr des Lösens des Flansches von dem Rahmen bei gleichzeitigem Übergang der Wechselscheibe von einer Verbindung mit der Türe auf eine Verbindung mit dem Flansch.

Im Zusammenhang mit der oben dargelegten Funktionalität des bekannten Doppelbajonettes ergeben sich bei einer Verwendung an einem Isolator jedoch zwei funktionsbedingte kritische Schwachpunkte, deren Eintreffen unter allen Umständen zu verhindern ist. Dies ist zum einen ein Zustand des Isolators, in dem die Türe bei Absenz eines Behälters zu Öffnen wäre. Zum anderen ist dies ein Zustand des Isolators, in dem der Behälter bei geöffneter Türe von dem Rahmen abnehmbar wäre.

Eine Aufgabe der Erfindung ist deshalb das Schaffen einer Tür-Vorrichtung, bei der sichergestellt ist, dass die Türe nicht vom Inneren des Isolators her zu öffnen ist, wenn kein Flansch eines Behälters an dem Isolatorrahmen angedockt ist und ein Bajonett des Flansches demnach nicht in einen entsprechenden Bajonettgang eingedreht ist, sowie das Schaffen einer weiteren Sicherungseinrichtung, die verhindert, dass das Bajonett des Flansches des an dem Isolatorrahmen befestigten Behälters bei geöffneter Türe und in eine Position bewegbar ist, aus der der Flansch von dem Isolatorrahmen abnehmbar ist.

Für eine Tür-Vorrichtung der eingangs genannten Art wird diese Aufgabe dadurch gelöst, dass eine erste Sicherungseinrichtung vorgesehen ist, die ein Öffnen der Türe nur dann ermöglicht, wenn ein Behälterflansch eines Behälters mit dem Isolatorrahmen abgedichtet fest verbunden ist, und eine zweite Sicherungseinrichtung vorgesehen ist, die ein Abnehmen des Behälterflanschs von dem Isolatorrahmen nur dann ermöglicht, wenn die Türe abgedichtet fest mit dem Isolatorrahmen verbunden ist, wobei die erste Sicherungseinrichtung eine Einrasteinrichtung sowie eine Verriegelungsmechanik aufweist, die einen einen Verriegelungsstift angreifenden und mit einem Hebel verbundenen Haken sowie einen reziprozierbar gelagerten und in den Gang eines Bajonettverschlusses des Behälterflanschs einbringbaren und auf den Hebel wirkenden Nocken enthält, an den ein Teil des verschlossenen Bajonettes des Behälterflanschs angrenzt.

Bevorzugte Ausführungsformen der Erfindung sind Gegenstand der Unteransprüche.

Bei der erfindungsgemäßen Tür-Vorrichtung wird durch das Merkmal, dass eine erste Sicherungseinrichtung vorgesehen ist, die ein Öffnen der Türe nur dann ermöglicht, wenn ein Behälterflansch eines Behälters mit dem Isolatorrahmen abgedichtet fest verbunden ist, und eine zweite Sicherungseinrichtung vorgesehen ist, die ein Abnehmen des Behälterflanschs von dem Isolatorrahmen nur dann ermöglicht, wenn die Türe abgedichtet fest mit dem Isolatorrahmen verbunden ist, wobei die erste Sicherungseinrichtung eine Einrasteinrichtung sowie eine Verriegelungsmechanik aufweist, die einen einen Verriegelungsstift angreifenden und mit einem Hebel verbundenen Haken sowie einen reziprozierbar gelagerten und in den Gang eines Bajonettverschlusses des Behälterflanschs einbringbaren und auf den Hebel wirkenden Nocken enthält, an den ein Teil des verschlossenen Bajonettes des Behälterflanschs angrenzt, erreicht, dass eine Tür-Vorrichtung für eine Isolator geschaffen ist, bei der in allen Betriebssituationen ein Höchstmass an Sicherheit gegen ungewollte Kontamination des um den Isolator ambienten Raumbereiches gegeben ist, da weder die Isolatortür von innen unabsichtlich geöffnet werden kann noch der Behälterflansch von außen unabsichtlich gelöst werden kann.

Gemäß der erfindungsgemäßen Tür-Vorrichtung ist vorgesehen, dass die erste Sicherungseinrichtung eine Einrasteinrichtung sowie eine Verriegelungsmechanik aufweist, die einen einen Verriegelungsstift angreifenden und mit einem Hebel verbundenen Haken sowie einen reziprozierbar gelagerten und in den Gang eines Bajonettverschlusses des Behälterflanschs einbringbaren und auf den Hebel wirkenden Nocken enthält, an den ein Teil des verschlossenen Bajonettes des Behälterflanschs angrenzt.

Vorzugsweise ist der Hebel dabei um eine Achse drehbar gelagert, wobei dieser Nocken sowie ein von einer Feder vorgespanntes Stützelement im Bereich sich gegenüberstehender Enden dieses Hebels angeordnet sind.

Weiterhin ist die erste Sicherungseinrichtung dabei vorzugsweise so ausgestaltet, dass der Nocken über den Hebel gegen die Kraft der Feder derart vorgespannt ist, dass der Haken bei Abwesenheit von auf den Nocken wirkenden Kräften an den Verriegelungsstift angreift, um die Tür in verschlossenem Zustand zu arretieren.

Des weiteren ist die erste Sicherungseinrichtung vorzugsweise so ausgestaltet, dass der Nocken reziprozierbar verschiebbar so gelagert ist, dass der Haken bei Anwesenheit von auf den Nocken wirkenden Kräften den Verriegelungsstift freigibt und die Tür zu öffnen ist.

Gemäß einer weiteren bevorzugten Ausführungsform der erfindungsgemäßen Tür-Vorrichtung ist vorgesehen, dass die Einrasteinrichtung der ersten Sicherungseinrichtung an dem Isolatorscharnier vorgesehen ist. Die Einrasteinrichtung kann dabei insbesondere als Sicherungsstift ausgebildet sein, der gemäß einer bevorzugten Ausführungsform zur Reduzierung von Reibungskräften um seine Längsachse drehbar gelagert sein kann.

Gemäß einer anderen bevorzugten Ausführungsform der erfindungsgemäßen Tür-Vorrichtung ist vorgesehen, dass der Nocken eine Einkerbung aufweist, wobei ein in der Nachbarschaft des Nockens gelagerter umstülpbarer Gummibalg so eingespannt ist, dass er den Nocken in allen Lagen abdichtet.

Gemäß einer weiteren wichtigen bevorzugten Ausführungsform der erfindungsgemäßen Tür-Vorrichtung ist vorgesehen, dass die zweite Sicherungseinrichtung eine reziprozierbar gelagerte und in den Gang eines Bajonettverschlusses der Türe einbringbare Blockierungseinrichtung sowie eine Verriegelungsmechanik aufweist, die einen die Blockierungseinrichtung angreifenden Hebel sowie einen und auf den Hebel wirkenden Nocken enthält, der mit einem Teil der geschlossenen Tür zusammenwirkt.

Vorzugsweise ist die zweite Sicherungseinrichtung dabei so ausgestaltet, dass dieser Hebel um eine Achse drehbar gelagert ist, wobei der über ein weiteres Stützelement von einer weiteren Feder vorgespannte Nocken sowie die Blockierungseinrichtung im Bereich sich gegenüberstehender Enden des Hebels angeordnet sind.
Weiterhin ist die zweite Sicherungseinrichtung dabei so ausgestaltet, dass der Nocken gegen die Kraft der Feder derart vorgespannt ist, dass die Blockierungseinrichtung bei Abwesenheit von auf den Nocken wirkenden Kräften in die Ebene des Ganges des Bajonettes der Türe vorgeschoben ist, um das Bajonett in dieser Position zu arretieren.

Des weiteren ist die zweite Sicherungseinrichtung vorzugsweise so ausgestaltet, dass der Nocken reziprozierbar verschiebbar so gelagert ist, dass die Blockierungseinrichtung bei Anwesenheit von auf den Nocken wirkenden Kräften aus der Ebene des Ganges des Bajonettes der Türe herausgeschoben ist, um das Bajonett in dieser Position freizugeben.

Gemäß einer anderen bevorzugten Ausführungsform der erfindungsgemäßen Tür-Vorrichtung ist vorgesehen, dass die Blockierungseinrichtung eine Einkerbung aufweist, wobei ein in der Nachbarschaft der Blockierungseinrichtung gelagerter umstülpbarer Gummibalg so eingespannt ist, dass er in allen Lagen die Blockierungseinrichtung abdichtet.

Gemäß einer besonderen Ausführungsform der erfindungsgemäßen Tür-Vorrichtung ist vorgesehen, dass die Blockierungseinrichtung als Verriegelungsstift ausgebildet ist.

Der Nocken der zweiten Sicherungseinrichtung grenzt gemäß einer weiteren besonderen Ausführungsform an ein mit der geschlossenen Tür verbundenes Bauteil an. Alternativ kann vorgesehen sein, dass der Nocken an ein Teil des geschlossenen Scharniers angrenzt.

Die erfindungsgemäße Tür-Vorrichtung wird im folgenden anhand einer bevorzugten Ausführungsform erläutert, die in den Figuren der Zeichnung dargestellt ist. Darin zeigen:
- Fig. 1: eine bevorzugte Ausführungsform einer erfindungsgemäßen Tür-Vorrichtung in einer Querschnittsansicht;
- Fig.2: ein oberer Teilausschnitt der in Figur 1 dargestellten bevorzugten Ausführungsform einer erfindungsgemäßen Tür-Vorrichtung in einer Querschnittsansicht;
- Fig.3: die in Figur 1 dargestellte Ausführungsform der erfindungsgemäßen Tür-Vorrichtung in einem ersten Zustand bei offener Tür mit angrenzendem Behälter in einer Querschnittsansicht;
- Fig.4: die in Figur 1 dargestellte Ausführungsform der erfindungsgemäßen Tür-Vorrichtung in einem zweiten Zustand bei geschlossener Tür ohne angrenzenden Behälter in einer Querschnittsansicht;
- Fig.5: eine bevorzugte Ausführungsform der ersten Sicherungseinrichtung der erfindungsgemäßen Tür-Vorrichtung in einer Querschnittsansicht;
- Fig.6: eine bevorzugte Ausführungsform der zweiten Sicherungseinrichtung der erfindungsgemäßen Tür-Vorrichtung in einer Querschnittsansicht;

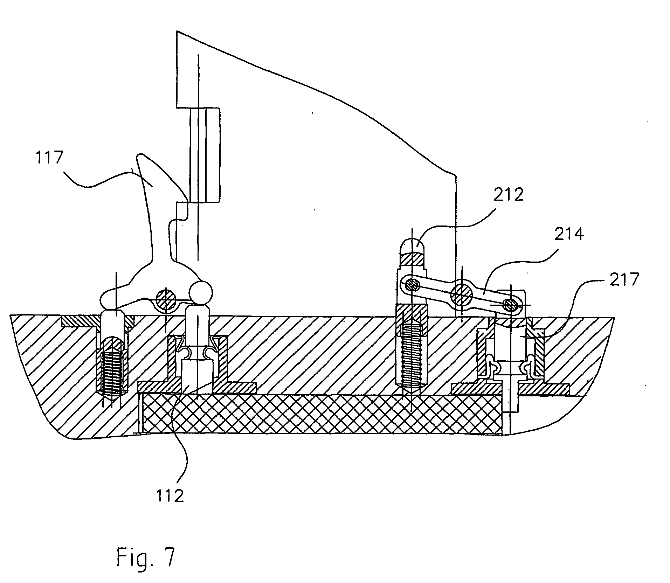

- Fig.7: die in Figur 1 dargestellte Ausführungsform der erfindungsgemäßen Tür-Vorrichtung in einer Ansicht von oben, aus der sich die relative Lage der ersten und zweiten Sicherungseinrichtung ergibt.

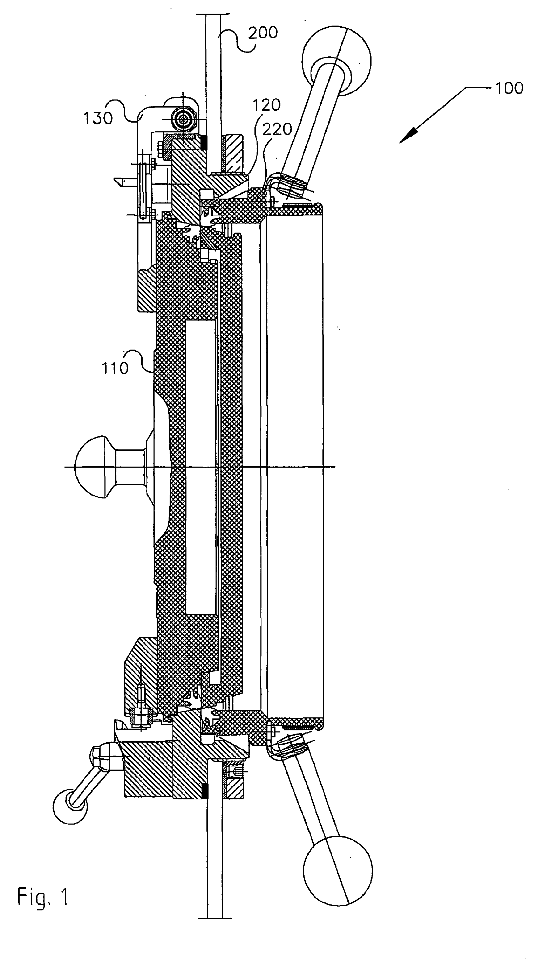

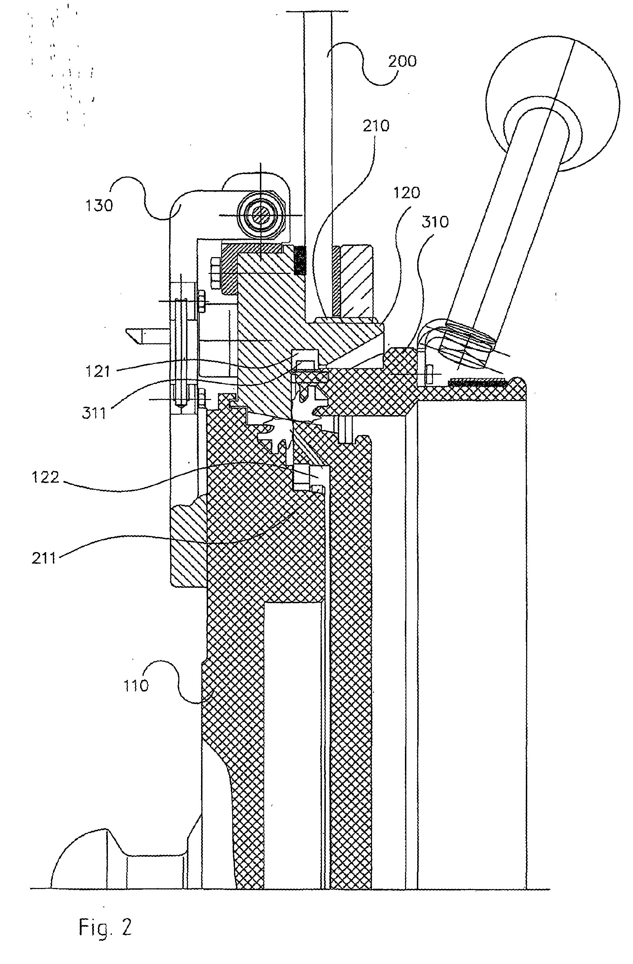

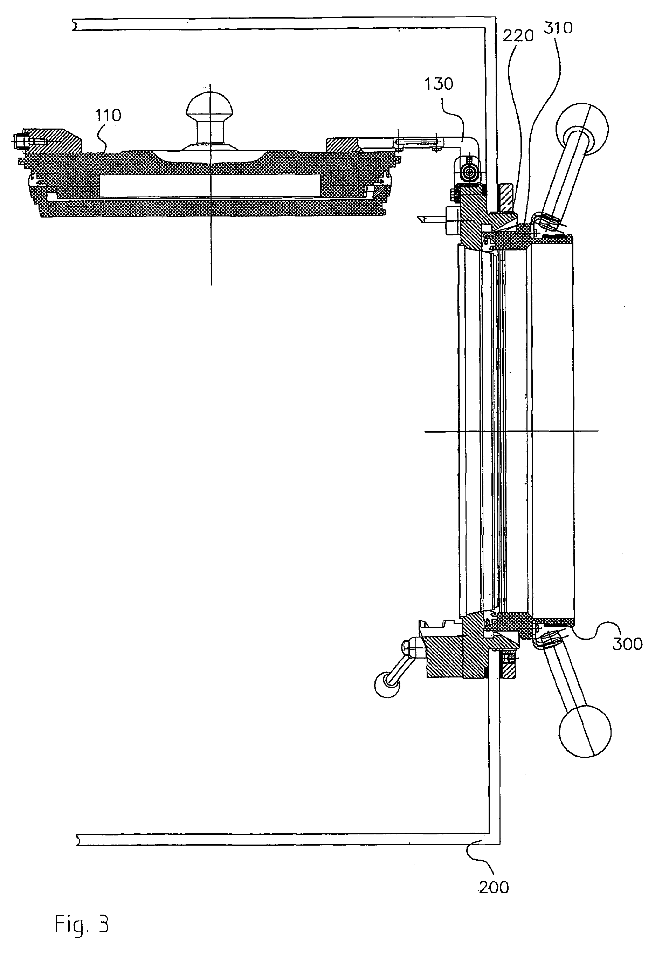

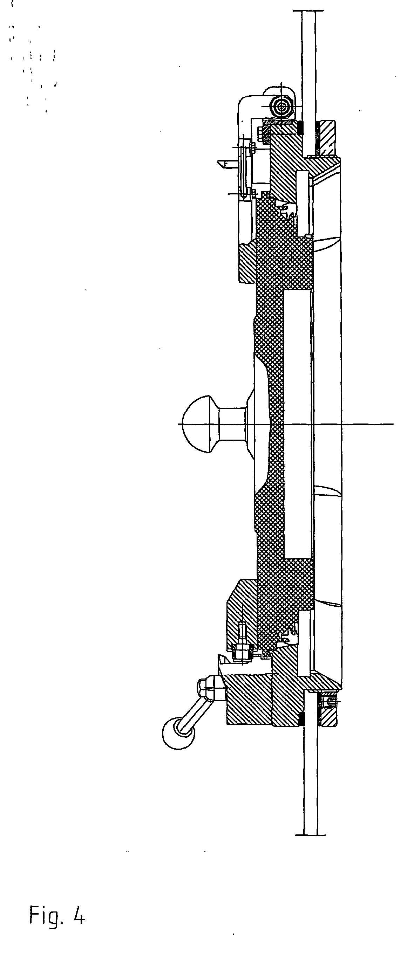

Die in den Figuren 1 bis 6 dargestellte Ausführungsform der erfindungsgemäßen Tür-Vorrichtung 110, 120 für einen Isolator 200 weist eine über ein Scharnier 130 an einem eine Öffnung 210 des Isolators 200 umschließenden Isolatorrahmen 220 befestigte Türe 110 sowie einen aus zwei Bajonettverschlüssen 121, 311; 122, 211 unterschiedlicher Chiralität zusammengesetzten Doppelbajonettverschluss 120 auf. Der Doppelbajonettverschluss 120 ermöglicht ein reziprozierbares Überführen des Isolators 200 aus einem ersten Zustand, in dem die von der Innenseite des Isolators 200 zu öffnende Türe 110 offen und von dem Isolatorrahmen 220 gelöst ist und in dem ein eine Öffnung eines Behälters 300 umschließender Behälterflansch 310 mit dem Isolatorrahmen 220 abgedichtet fest verbunden ist, in einen zweiten Zustand, in dem die Türe 110 geschlossen und mit dem Isolatorrahmen 220 angedichtet fest verbunden ist, wobei der Behälterflansch 310 von dem Isolatorrahmen 220 gelöst ist. Erfindungswesentlich ist dabei eine erste Sicherungseinrichtung 140 vorgesehen, die ein Öffnen der Türe 110 nur dann ermöglicht, wenn ein Behälterflansch 310 eines Behälters 300 mit dem Isolatorrahmen 220 abgedichtet fest verbunden ist, und es ist ebenfalls erfindungswesentlich eine zweite Sicherungseinrichtung 150 vorgesehen, die ein Abnehmen des Behälterflanschs 310 von dem Isolatorrahmen 220 nur dann ermöglicht, wenn die Türe 110 abgedichtet fest mit dem Isolatorrahmen 220 verbunden ist.

Die erste Sicherungseinrichtung 140 weist eine Einrasteinrichtung 116 sowie eine Verriegelungsmechanik auf, die einen die als Verriegelungsstift 116 ausgebildete Einrasteinrichtung angreifenden und mit einem Hebel 114 verbundenen Haken 117 sowie einen reziprozierbar gelagerten und in den Gang 121 des Bajonettverschlusses 121, 311 des Behälterflanschs 310 einbringbaren und auf den Hebel 114 wirkenden Nocken 112 enthält, an den ein Teil des verschlossenen Bajonettes 311 des Behälterflanschs 310 angrenzt.

Der Hebel 114 ist um eine Achse 115 drehbar gelagert, wobei der Nocken 112 sowie ein von einer Feder 120 vorgespanntes Stützelement 127 im Bereich sich gegenüberstehender Enden 114', 144" des Hebels 114 angeordnet sind.

Der Nocken 112 ist dabei über den Hebel 114 gegen die Kraft der Feder 120 derart vorgespannt, dass der Haken 117 bei Abwesenheit von auf den Nocken 112 wirkenden Kräften an den Verriegelungsstift 116 angreift, um die Türe, 110 in verschlossenem Zustand zu arretieren. Des weiteren ist der Nocken 112 reziprozierbar verschiebbar so gelagert, dass der Haken 117 bei Anwesenheit von auf den Nocken 112 wirkenden Kräften den Verriegelungsstift 116 freigibt und die Türe 110 zu öffnen ist.

Die Einrasteinrichtung 116 der ersten Sicherungseinrichtung 140 ist an dem Isolatorscharnier 130 angebracht, wobei die Einrasteinrichtung 116 als Sicherungsstift ausgebildet ist, der zur Verminderung von Reibung um seine Längsachse drehbar gelagert ist. Der Nocken 112 weist des weiteren eine Einkerbung 112" auf, wobei ein in der Nachbarschaft des Nockens 112 gelagerter umstülpbarer Gummibalg 112' so eingespannt ist, dass er den Nocken 112 in allen Lagen abdichtet.

Die zweite Sicherungseinrichtung 150 weist eine reziprozierbar gelagerte und in den Gang 122 des Bajonettverschlusses 122, 211 der Türe 110 einbringbare Blockierungseinrichtung 217 sowie eine Verriegelungsmechanik auf, die einen die Blockierungseinrichtung 217 angreifenden Hebel 214 sowie einen und auf den Hebel 214 wirkenden Nocken 212 enthält, der mit einem Teil der geschlossenen Tür zusammenwirkt. Die Blockierungseinrichtung 217 ist bei der in den Figuren dargestellten Ausführungsform als Verriegelungsstift ausgebildet.

Der Hebel ist 214 um eine Achse 215 drehbar gelagert, wobei der über ein Stützelement 227 von einer Feder 220 vorgespannte Nocken 212 sowie die Blockierungseinrichtung 217 im Bereich sich gegenüberstehender Enden 214', 214" des Hebels 214 angeordnet sind.

Der Nocken 212 ist dabei gegen die Kraft der Feder 220 derart vorgespannt, dass die Blockierungseinrichtung 217 bei Abwesenheit von auf den Nocken 212 wirkenden Kräften in die Ebene des Ganges 122 des Bajonettes 211 der Türe 110 vorgeschoben ist, um das Bajonett 211 in dieser Position zu arretieren. Des weiteren ist der Nocken 212 reziprozierbar verschiebbar so gelagert, dass die Blockierungseinrichtung 217 bei Anwesenheit von auf den Nocken 212 wirkenden Kräften aus der Ebene des Ganges 122 des Bajonettes 211 der Türe herausgeschoben ist, um das Bajonett 211 in dieser Position freizugeben.

Die Blockierungseinrichtung 217 weist eine Einkerbung 217" auf, wobei ein in der Nachbarschaft der Blockierungseinrichtung 217 gelagerter umstülpbarer Gummibalg 217' so eingespannt ist, dass in allen Lagen die Blockierungseinrichtung 217 abgedichtet ist.

Der Nocken 212 grenzt an ein Teil des Scharniers 130 der geschlossenen Tür-Vorrichtung 110, 120 an.

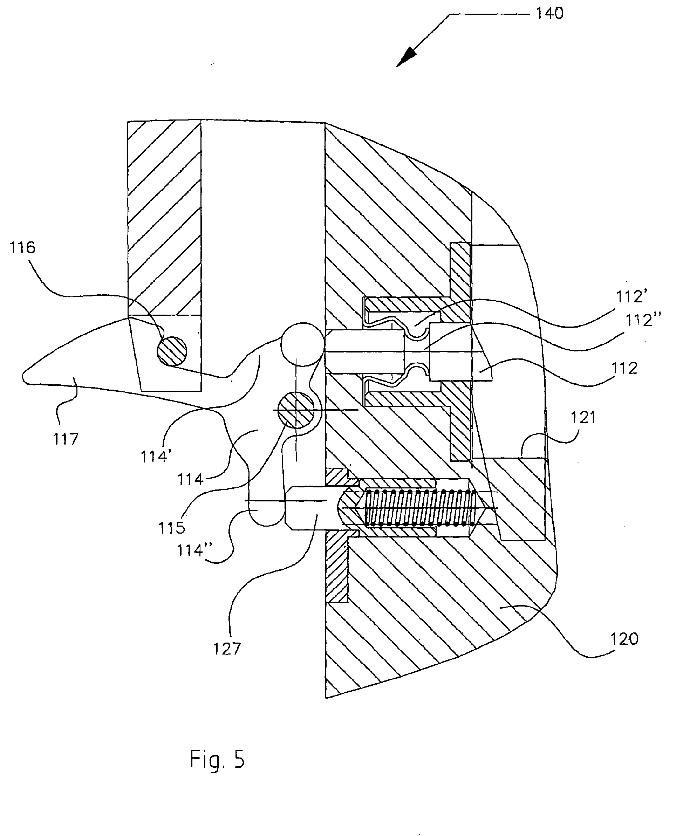

Aufgrund des oben geschilderten Zusammenwirkens des Nockens 112 mit dem auf den Sicherungsstift ist erreicht, dass die Türe 110 von innen nur dann zu öffnen ist, wenn ein Flansch 310 eines Behälters 300 an dem Isolatorrahmen 220 angedockt ist und der betreffende Bajonettverschluss 121, 311 entsprechend eingedreht ist. Wie in Figur 5 dargestellt, ist der Nocken 112 dabei gegen die Kraft der Feder 120 in Richtung auf den Hebel 114 zu bewegbar, wobei der Hebel 114 um eine Drehachse 115 drehbar gelagert ist und bei einem entsprechenden Vorstoßen des Nockens 112 einen Sicherungsstift 116 des Scharniers der Türe 110 freigibt, wodurch ein Öffnen der Türe 110 erst ermöglicht wird.

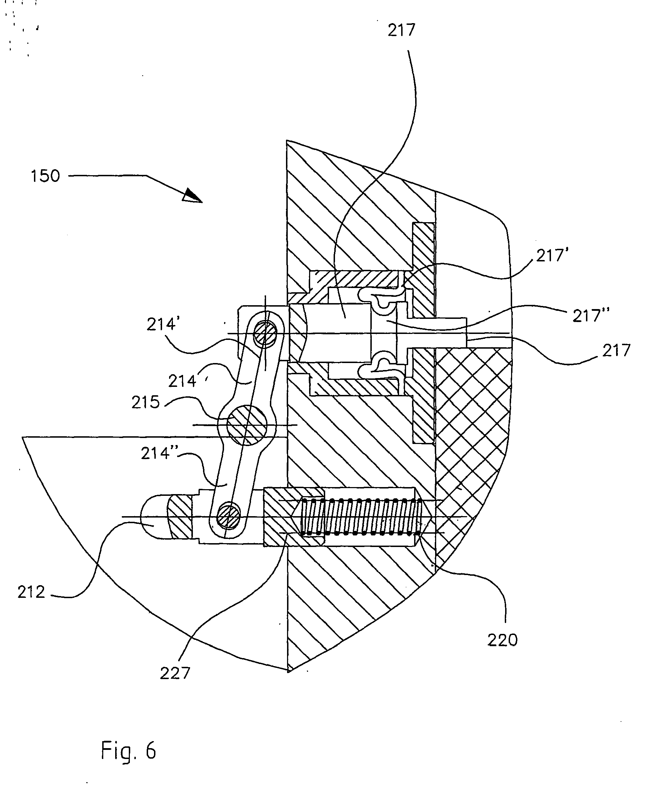

Über den in Fig. 6 dargestellten Wirkungsmechanismus, bei dem ein gegen die Kraft der Feder 220 vorgespannter Nocken 212 durch eine Kontaktierung seitens der Türe 110 oder des Scharniers 130 gegen die Kraft der Feder 220 bewegt wird, wird der um eine Achse 215 drehbar gelagerte Hebel 214 so bewegt, dass die als Sicherungsstift ausgebildete Blockierungseinrichtung 217 aus der Ebene des Bajonettganges 122 herausgezogen wird, um den Bajonettgang 122 für die Bewegung eines betreffenden Bajonettes 211 freizugeben. Bei Abwesenheit einer auf den Nocken 212 einwirkenden Kraft ist der um eine Achse 215 drehbar gelagerter Hebel 214 so gelagert, dass der Sicherungsstift 217 in die Ebene des Bajonettganges 122 vorgeschoben ist, um den Bajonettgang 122 für die Bewegung eines betreffenden Bajonettes 211 zu arretieren.

Somit wird durch die Wirkung der ersten Sicherungseinrichtung 140 bei Abwesenheit eines in seine Endposition gebrachten Bajonetts 311 eines Behälters 300 in dem betreffenden Bajonettgang 121 durch die Vorspannung des Hebels 114 seitens der Feder 120 erreicht, dass der Haken 117 des Hebels 114 über den Sicherungsstift 116 springt und dadurch die Türe in geschlossenem Zustand arretiert wird. Des weiteren wird durch die Wirkung der zweiten Sicherungseinrichtung 150 bei einem Öffnen der Tür 110 durch die Vorspannung des Hebels 214 seitens der Feder 220 erreicht, dass der Hebel 214 den Verriegelungsstift 217 in den Bajonettgang 122 hineinschiebt und dadurch eine Arretierung eines in der Endposition in dem Bajonettgang 122 befindlichen Bajonettes 211 bewirkt.

Durch die Funktion der ersten Sicherungseinrichtung 140 wird bei einem Einbringen des Bajonetts 311 eines Behälters 300 in seine Endposition in dem betreffenden Bajonettgang 121 durch ein Niederdrücken des Nockens 112 erreicht, dass der Hebel 114 den Sicherungsstift 116 freigibt und dadurch die Arretierung der verschlossene Türe gelöst wird. Durch die Funktion der zweiten Sicherungseinrichtung wird bei einem Verschließen der Tür durch Druck des Scharniers 130 oder der Türe 110 über ein Niederdrücken des Nockens 212 erreicht, dass der Hebels 214 den Verriegelungsstift 217 aus dem Bajonettgang 121 herauszieht und dadurch die Arretierung eines Bajonettes 211 in dem Bajonettgang 121 gelöst wird.

Durch die Verriegelungsfunktionen der ersten und zweiten Sicherungseinrichtung 140, 150 ist somit gewährleistet, dass weder die Isolatortüre 110 unzeitgemäß von innen unabsichtlich geöffnet werden kann noch der Behälterflansch 310 unzeitgemäß von außen unabsichtlich gelöst werden kann.

Das oben erläuterte Ausführungsbeispiel der Erfindung dient lediglich dem Zweck eines besseren Verständnisses der durch die Ansprüche definierten erfindungsgemäßen Lehre, die als solche durch das Ausführungsbeispiel nicht eingeschränkt ist.

## Patentansprüche

1. Tür-Vorrichtung (110, 120) für einen Isolator (200) mit einer Türe (110), die über ein Scharnier (130) an einem eine Öffnung des Isolators (200) umschließenden Isolatorrahmen befestigt ist, und einem aus zwei Bajonettverschlüssen (121, 311; 122, 211) unterschiedlicher Chiralität zusammengesetzten Doppelbajonettverschluss zum reziprozierbaren Überführen des Isolators (200) aus einem ersten Zustand, in dem die von der Innenseite des Isolators (100) zu öffnende Türe (110) offen und' von dem Isolatorrahmen (130) gelöst ist und ein eine Öffnung eines Behälters (300) umschließender Behälterflansch (310) mit dem Isolatorrahmen (220) abgedichtet fest verbunden ist, in einen zweiten Zustand, in dem die Türe (110) geschlossen und mit dem Isolatorrahmen (220) angedichtet fest verbunden ist und der Behälterflansch (310) von dem Isolatorrahmen (220) gelöst ist, wobei eine erste Sicherungseinrichtung (140) vorgesehen ist, die ein Öffnen der Türe (110) nur dann ermöglicht, wenn ein Behälterflansch (310) eines Behälters (300) mit dem Isolatorrahmen (220) abgedichtet fest verbunden ist, und eine zweite Sicherungseinrichtung (150) vorgesehen ist, die ein Abnehmen des Behälterflanschs (310) von dem Isolatorrahmen (220) nur dann ermöglicht, wenn die Türe (110) abgedichtet fest mit dem Isolatorrahmen (220) verbunden ist, wobei, die erste Sicherungseinrichtung (140) eine Einrasteinrichtung sowie eine Verriegelungsmechanik aufweist, die einen einen Verriegelungsstift (116) angreifenden und mit einem Hebel (114) verbundenen Haken (117) sowie einen reziprozierbar gelagerten und in den Gang eines Bajonettverschlusses des Behälterflanschs (310) einbringbaren und auf den Hebel (114) wirkenden Nocken (112) enthält, an den ein Teil des verschlossenen Bajonettes des Behälterflanschs (310) angrenzt.

2. Vorrichtung nach Anspruch 1, **dadurch gekennzeichnet, dass** der Hebel (114) um eine Achse (115) drehbar gelagert ist, wobei der Nocken (112) sowie ein von einer Feder (120) vorgespanntes Stützelement (121) im Bereich sich gegenüberstehender Enden des Hebels (114) angeordnet sind.

3. Vorrichtung nach Anspruch 2, **dadurch gekennzeichnet, dass** der Nocken (112) über den Hebel (114) gegen die Kraft der Feder (120) derart vorgespannt ist, dass der Haken (117) bei Abwesenheit von auf den Nocken (112) wirkenden Kräften an den Verriegelungsstift (116) angreift, um die Tür in verschlossenem Zustand zu arretieren.

4. Vorrichtung nach einem der Ansprüche 2 oder 3, **dadurch gekennzeichnet**, der Nocken (112) reziprozierbar verschiebbar so gelagert ist, dass der Haken (117) bei Anwesenheit von auf den Nocken (112) wirkenden Kräften den Verriegelungsstift (116) freigibt und die Tür zu öffnen ist.

5. Vorrichtung nach einem der Ansprüche 2 bis 4, **dadurch gekennzeichnet, dass** die Einrasteinrichtung der ersten Sicherungseinrichtung an dem Isolatorscharnier vorgesehen ist.

6. Vorrichtung nach Anspruch 5, **dadurch gekennzeichnet, dass** die Einrasteinrichtung als Sicherungsstift ausgebildet ist.

7. Vorrichtung nach Anspruch 6, **dadurch gekennzeichnet, dass** der Sicherungsstift um seine Längsachse drehbar gelagert ist.

8. Vorrichtung nach einem der Ansprüche 2 bis 7, **dadurch gekennzeichnet, dass** der Nocken (112) eine Einkerbung aufweist, wobei ein in der Nachbarschaft des Nockens (112) gelagerter umstülpbarer Gummibalg (112') so eingespannt ist, dass er den Nocken (112) in allen Lagen abdichtet.

9. Vorrichtung nach einem der vorhergehenden Ansprüche, **dadurch gekennzeichnet, dass** die zweite Sicherungseinrichtung eine reziprozierbar gelagerte und in den Gang eines Bajonettverschlusses der Türe einbringbare Blockierungseinrichtung (217) sowie eine Verriegelungsmechanik aufweist, die einen die Blockierungseinrichtung (217) angreifenden Hebel (214) sowie einen auf den Hebel (214) wirkenden Nocken (212) enthält, der mit einem Teil der geschlossenen Tür zusammenwirkt.

10. Vorrichtung nach Anspruch 9, **dadurch gekennzeichnet, dass** der Hebel (214) um eine Achse (215) drehbar gelagert ist, wobei der über ein Stützelement (221) von einer Feder (220) vorgespannte Nocken (112) sowie die Blockierungseinrichtung (217) im Bereich sich gegenüberstehender Enden des Hebels (114) angeordnet sind.

11. Vorrichtung nach einem der Ansprüche 9 oder 10, **dadurch gekennzeichnet, dass** der Nocken (212) gegen die Kraft der Feder (220) derart vorgespannt ist, dass die Blockierungseinrichtung (217) bei Abwesenheit von auf den Nocken (212) wirkenden Kräften in die Ebene des Ganges des Bajonettes der Türe vorgeschoben ist, um das Bajonett in dieser Position zu arretieren.

12. Vorrichtung nach einem der Ansprüche 7 bis 9, **dadurch gekennzeichnet, dass** der Nocken (212) reziprozierbar verschiebbar so gelagert ist, dass die Blockierungseinrichtung (217) bei Anwesenheit von auf den Nocken (212) wirkenden Kräften aus der Ebene des Ganges des Bajonettes der Türe herausgeschoben ist, um das Bajonett in dieser Position freizugeben.

13. Vorrichtung nach einem der Ansprüche 9 bis 12, **dadurch gekennzeichnet, dass** die Blockierungseinrichtung (217) eine Einkerbung aufweist, wobei ein in der Nachbarschaft der Blockierungseinrichtung (217) gelagerter umstülpbarer Gummibalg (217') so eingespannt ist, dass er in allen Lagen die Blockierungseinrichtung (217) abdichtet.

14. Vorrichtung nach einem der Ansprüche 9 bis 13, **dadurch gekennzeichnet, dass** die Blockierungseinrichtung (217) als Verriegelungsstift ausgebildet ist.

15. Vorrichtung nach einem der Ansprüche 9 bis 14, **dadurch gekennzeichnet, dass** der Nocken (212) an ein mit der geschlossenen Tür verbundenes Bauteil angrenzt.

16. Vorrichtung nach einem der Ansprüche 9 bis 14, **dadurch gekennzeichnet, dass** der Nocken (212) an ein Teil des geschlossenen Scharniers angrenzt.

## Claims

1. A door fixture (110, 120) for an isolator (200), comprising a door (110) which is fixed via a hinge (130) to an isolator frame surrounding an opening of said isolator (200), and a double bayonet lock consisting of two bayonet locks (121, 311; 122, 211) of different chiralities for reciprocatory transfer of said isolator (200) from a first state, in which said door, which opens from inside said isolator (200), is open and detached from said isolator frame (220) and a container flange (310) surrounding an opening of a container (300) is sealingly locked to said isolator frame (220), to a second stat,e, in which said door (110) is closed and sealingly locked to said isolator frame (220) and said container flange (310) is detached from said isolator frame (220), **characterized in that** a first safety system (140) is provided which allows said door (110) to be opened only if a container flange (310) of a container (300) is sealingly locked to said isolator frame (220), and a second safety system (150) is provided which allows for detachment of said container flange (310) from said isolator frame (220) only if said door (110) is sealingly locked to said isolator frame (220), which first safety system (140) comprises a latch device (116), a locking mechanism comprising a hook (117) adapted to engage said latch device embodied as a latch pin (116) and connected to a lever (114), and a reciprocatably mounted cam (112) which can be inserted into said path (121) of said bayonet lock (311) of said container flange (310) and which acts on said lever (114) and is adjacent to a part of the locked bayonet (311) of said container flange (310).

2. A fixture as defined in claim 1, **characterized in that** said lever (114) is mounted for rotation about an axis (115), and said cam (112) and also a supporting element (121) biased by a spring (120) are disposed in the region of opposing end portions of said lever (114) .

3. A fixture as defined in claim 2, **characterized in that** said cam (112) is biased via said lever (114) by the force of said spring (120) such that said hook (117) engages said latch pin (116) in the absence of forces acting on said cam (112), in order to arrest the door in the locked state.

4. A fixture as defined in claim 2 or claim 3, **characterized in that** said cam (112) is mounted for reciprocatory displacement such that said hook (117) disengages said latch pin (116) in the presence of forces acting on said cam (112), and the door can be opened.

5. A fixture as defined in any one of claims 2 to 4, **characterized in that** the locking means of said first safety system are provided on the isolator hinge.

6. A fixture as defined in claim 5, **characterized in that** said locking means are in the form of a latch pin.

7. A fixture as defined in claim 6, **characterized in that** said latch pin is mounted for rotation about its longitudinal axis.

8. A fixture as defined in any one of claims 2 to 7, **characterized in that** said cam (112) has a groove, and an invertible rubber bellows (112') disposed in the vicinity of said cam (112) is clamped such that it seals said cam (112) in all positions thereof.

9. A fixture as defined in any one of the previous claims, **characterized in that** the second safety system comprises a reciprocatably mounted blocking device (217) capable of being inserted into the path of a bayonet lock of said door, a locking mechanism comprising a lever (214) which is adapted to engage said blocking device (217), and a cam (212) which acts on said lever (214) and cooperates with a part of the closed door.

10. A fixture as defined in claim 9, **characterized in that** said lever (214) is mounted for rotation about an axis (215), and said cam (112), biased via a supporting element (221) by a spring (220), and said blocking device (217) are disposed in the region of opposing end portions of said lever (114).

11. A fixture as defined in claim 9 or claim 10, **characterized in that** said cam (212) is biased by the force of said spring (220) in such a manner that said blocking device (217), in the absence of forces acting on said cam (212), is pushed forward into the plane of the path of the bayonet of the door, in order to arrest said bayonet in this position.

12. A fixture as defined in any one of claims 7 to 9, **characterized in that** said cam (212) is mounted for reciprocatory displacement such that said blocking device (217), in the presence of forces acting on said cam (212), is withdrawn from the plane of the path of said bayonet of the door, in order to, unblock said bayonet in this position.

13. A fixture as defined in any one of claims 9 to 12, **characterized in that** said blocking device (217) exhibits a groove, and an invertible rubber bellows (217') mounted in the vicinity of said blocking device (217) is clamped such that it seals said blocking device (217) in all positions thereof.

14. A fixture as defined in any one of claims 9 to 13, **characterized in that** said blocking device (217) is in the form of a bolt.

15. A fixture as defined in any one of claims 9 to 14, **characterized in that** said cam (212) is adjacent to a component connected to the closed door.

16. A fixture as defined in any one of claims 9 to 14, **characterized in that** said cam (212) is adjacent to a part of the closed hinge.

## Revendications

1. Dispositif de porte (110, 120) pour un isolateur (200) présentant une porte (110) fixée par l'intermédiaire d'une charnière (130) sur un cadre d'isolateur définissant une ouverture de l'isolateur (200), et un joint à baïonnette double constitué par deux joints à baïonnette (121, 311 ; 122, 211) de chiralités différentes pour passer l'isolateur (200), de façon réversible, d'un premier état, où la porte (110) à ouvrir à partir de l'intérieur de l'isolateur (200) est ouverte et est détachée du cadre d'isolateur (130) et où une collerette de récipient (310) entourant une ouverture d'un récipient (300) est liée fermement et de façon étanche au cadre d'isolateur (220), à un deuxième état, où la porte (110) est fermée et liée fermement et de façon étanche au cadre d'isolateur (220) et où la collerette de récipient (310) est détachée du cadre d'isolateur (220), un premier dispositif de retenue (140) étant prévu qui ne permet l'ouverture de la porte (110) que dans le cas où une collerette de récipient (310) d'un récipient (300) est accostée fermement et de façon étanche au cadre d'isolateur (220) et un deuxième dispositif de retenue (150) étant prévu qui ne permet le détachement de la collerette de récipient (310) du cadre d'isolateur (220) que dans le cas où la porte (110) est accostée fermement et de façon étanche au cadre d'isolateur (220), le premier dispositif de retenue (140) présentant un dispositif à encliquetage et un mécanisme de verrouillage qui comprend un crochet (117) engageant une goupille de verrouillage (116) et associé à un levier (114) ainsi qu' un mentonnet (112) logé de façon réversible et approprié à être introduit dans le passage à baïonnette d'un joint à baïonnette de la collerette de récipient (310) et agissant sur le levier (114), une partie de la baïonnette fermée de la collerette de récipient (310) avoisinant ce mentonnet.

2. Dispositif selon la revendication 1,
**caractérisé en ce que** le levier (114) est monté pivotant autour d'un axe (115), le mentonnet (112) et un élément de support (127) précontraint par un ressort (120) étant disposés au voisinage des extrémités opposées du levier (114).

3. Dispositif selon la revendication 2,
**caractérisé en ce que** le mentonnet (112) est précontraint, par l'intermédiaire du levier (114), contre l'effort du ressort (120) de façon que le crochet (117) attaque la goupille de verrouillage (116), en cas de manque d'efforts agissant sur le mentonnet (112), pour retenir la porte dans son état de fermeture.

4. Dispositif selon l'une des revendications 2 ou 3,
**caractérisé en ce que** le mentonnet (112) est monté réversiblement déplaçable de façon que le crochet (117) libère la goupille de verrouillage (116), en cas d'efforts agissant sur le mentonnet (112), et que la porte peut être ouverte.

5. Dispositif selon l'une des revendications 2 à 4,
**caractérisé en ce que** le dispositif à encliquetage (116) du premier dispositif de retenue (140) est prévu sur la charnière (130) de l'isolateur.

6. Dispositif selon la revendication 5,
**caractérisé en ce que** le dispositif à encliquetage (116) est réalisé en forme d'une goupille de retenue.

7. Dispositif selon la revendication 6,
**caractérisé en ce que** la goupille de retenue est montée de façon rotative autour de son axe longitudinal.

8. Dispositif selon l'une des revendications 2 à 7,
**caractérisé en ce que** le mentonnet (112) présente une entaille (112"), un soufflet de caoutchouc (112') relevable monté au voisinage du mentonnet (112) étant serré de façon à ce qu'il rend étanché le mentonnet (112) dans toutes les positions.

9. Dispositif selon l'une des revendications préalables,
**caractérisé en ce que** le deuxième dispositif de retenue (150) présente un dispositif d'arrêt (217) monté de façon réversible et approprié à être introduit dans le passage à baïonnette (122, 211) de la porte (110) ainsi qu'un mécanisme de verrouillage qui comprend un levier (214) attaquant le dispositif d'arrêt (217) et un mentonnet (212) agissant sur le levier (214) et coopérant avec une portion de la porte fermée.

10. Dispositif selon la revendication 9,
**caractérisé en ce que** le levier (214) est monté pivotant autour d'un axe (215), le mentonnet (212) précontraint par un ressort (220), par l'intermédiaire d'un élément de support (221), et le dispositif d'arrêt (217) étant disposés au voisinage des extrémités (214', 214") opposées du levier (214).

11. Dispositif selon l'une des revendications 9 ou 10,
**caractérisé en ce que** le mentonnet (212) est précontraint contre l'effort du ressort (220) de façon que le dispositif d'arrêt (217) est avancé, en cas de manque d'efforts agissant sur le mentonnet (212), dans le plan du passage à baïonnette (122) de la porte (110) pour retenir la baïonnette (211) dans cette position.

12. Dispositif selon l'une des revendications 7 à 9,
**caractérisé en ce que** le mentonnet (212) est monté réversiblement déplaçable de façon que le dispositif d'arrêt (217) est sorti, en cas d'efforts agissant sur le mentonnet (212), du plan du passage (122) de la baïonnette (211) de la porte pour libérer la baïonnette (211) dans cette position.

13. Dispositif selon l'une des revendications 9 à 12,
**caractérisé en ce que** le dispositif d'arrêt (217) présente une entaille (217"), un soufflet de caoutchouc (217') relevable monté au voisinage du dispositif d'arrêt (217) étant serré de façon à ce que le dispositif d'arrêt (217) soit étanché dans toutes les positions.

14. Dispositif selon l'une des revendications 9 à 13,
**caractérisé en ce que** le dispositif d'arrêt (217) est réalisé en forme de goupille de retenue.

15. Dispositif selon l'une des revendications 9 à 14,
**caractérisé en ce que** le mentonnet (212) est adjacent à un élément constructif raccordé à la porte fermée.

16. Dispositif selon l'une des revendications 9 à 14,
**caractérisé en ce que** le mentonnet (212) est adjacent à une partie de la charnière (130) fermée.
